# EUROPEAN PATENT SPECIFICATION

(11) **EP 0 329 364 B1**
(45) Date of publication and mention of the grant of the patent: **13.01.1993**
(21) Application number: 89301343.3
(22) Date of filing: 13.02.1989
(51) Int. Cl.: B01D 46/42, B01D 46/02, B01D 46/12, B03C 3/01

(54) **Apparatus for treating gas**
Einrichtung zur Behandlung von Gasen
Dispositif de traitement du gaz

(30) Priority: 12.02.1988 US 155567; 12.02.1988 US 155446
(43) Date of publication of application: 23.08.1989
(73) Proprietor: HOSOKAWA MICRON INTERNATIONAL INC., New York, NY 10017 (US)
(72) Inventor: Giusti, Giambattista, New Providence New Jersey 07974 (US); Duyckinck, Robert W., New Providence New Jersey 07974 (US)
(74) Representative: Abbie, Andrew Kenneth

(56) References cited:
- EP-A- 0 014 782
- GB-A- 922 730
- GB-A- 952 277
- US-A- 3 739 557

## Description

This invention relates to gas treating apparatus and more particularly to gas inlet system constructions therefor. The invention is of particular, but not exclusive, relevance to industrial fabric filter dust collector apparatus which filter particulate laden gas streams.

It has long been recognised that a controlled pattern of equable distribution and a control of velocity of a gas stream at the locus of introduction thereof into gas treating apparatus can materially contribute to increased efficiency of operation and extended operating life of the gas treating components thereof. One area of preferential concern has been in the industrial gas filtration field, and particularly in the fabric filter dust collector field. One type of such fabric filter dust collector, also called a "baghouse", typically employs a large number of tubular fabric filters suspended from a tube sheet and interposed in the path of a particulate laden gas stream to effect the separation of the particulate matter from the gaseous carrier as the latter traverses the fabric filter media in its passage from the dirty air plenum to the clean air plenum portion of the filter housing. Another type of fabric filter dust collector employs filter media in the form of flat panels rather than tubular filter bags. In both such types of dust collector, a particulate laden gas stream conventionally enters the filter housing either through a breach in a portion of the lower housing wall defining a dust collecting hopper and generally changes direction and flows upwardly toward the filter media or enters the housing through an opening in the upper sidewall portion of the collector housing defining at least a portion of the perimeter of the dirty air plenum. The particulate matter borne by the incoming gas stream normally accumulates on the upstream filter medium surface and, unless removed by dislodgement, results in a progressive increase in pressure drop across the filter media and in a concomitant reduction in the rate of gas flow through the filter media. In order to avoid excessive particulate accumulation on the upstream surface of the filter media, the filter media is periodically cleaned by utilization of various known techniques, such as pulse jet and reverse flow cleaning and bag shaking. The outcome of such cleaning operation is that a large part of the accumulated particulates are induced to drop off the filter media surface and fall downwardly, under the influence of gravity and generally countercurrent to normal gas flow, toward and into a collection hopper.

In most industrial fabric filter installations of the type described above, the particulate bearing gas stream approaches the filter through a delivery or conveying conduit having a cross-sectional area sized to effect gas stream displacement at sufficiently high velocities, usually in the order of 3500-4000 feet/min (18 to 20 m/s) to assure maintaining the particulate matter in suspended entrained condition therein. Antithetically thereto, it has been recognized that high efficiency - low loss filter operation and increased operating life of the filter components is dependent, at least in substantial part, by an equable distribution of deposited particulates on all the available filter media surfaces; by minimization, if not avoidance, of turbulence in gas flow within the dirty air plenum; by minimization of particulate reentrainment during or after filter media cleaning and by minimization of localized wear and abrasion of filter components. As is apparent, the high velocity attended operating parameters of the conduit confined approaching particulate bearing gas stream are basically antithetical to the desired optimum parameters of gas stream displacement within the filter housing and the attempted conversion thereof, normally within localized dimensional restraints, conventionally employs transition ducting and the interposition of turning vanes, baffle plates and related gas flow direction and velocity modifiers to the end of hopefully effecting a more equable distribution of the incoming particulate bearing gas steam relative to the available filter media surface and a marked reduction in its approach velocity in a short length of gas stream travel.

The transition of the shape and velocity of the incoming particulate bearing gas stream to the desirable flow conditions within the fabric filter media housing has been a long standing problem in this art. Many expedients, such as expansion of conduit dimension and the use of baffle plates, turning vanes, flow dividers, perforated plate diffusers, gratings, grids, various types of deflector or distribution plates and the selective location thereof in the path of the incoming gas stream and the like have been suggested to enhance fabric filter performance in the separation and collection of industrial dusts. Illustrative of some of such varied expedients are US Patents 4,227,903; 4,544,383; 4,655,804; 4,213,766; 3,926,595; 3,831,354; 3,831,350; 3,739,557; 3,425,189 and 3,155,474.

Also, GB-A-952,277 discloses apparatus for treating gas being conveyed in a moving high velocity gas stream of first predetermined cross-sectional area, comprising
gas treating means perimetrically defining a gas treatment zone of predetermined height, width and depth,
a gas impervious housing perimetrically surrounding said gas treatment zone,
gas inlet means for introducing said gas stream at reduced velocity into said gas treatment zone, said gas inlet means comprising,
a first velocity reducing transition section having an entry port of said first predetermined cross-sectional area for reception of said high velocity gas stream moving in a first flow direction and an exit port of second and larger predetermined cross-sectional area for delivering said gas stream therefrom at a first reduced velocity and in a second, different flow direction,
a second velocity reducing transition section having an entry port of said second predetermined cross-sectional area to receive said reduced velocity gas stream moving in said second flow direction from said exit port of said first transition section and an exit port of a third and larger cross-sectional area for delivering said gas stream therefrom at a second and further reduced velocity in a third flow direction different to both said first and second flow directions, wherein the first and third flow directions are substantially perpendicular to the second flow direction. An object 6f this invention is to provide an improved arrangement 6f the gas inlet means in an apparatus as defined in the last preceding paragraph and to this end the present invention is characterised in that in such an apparatus the third flow direction is substantially perpendicular to the first flow direction.

Flow diverting vane means may be disposed across the exit port of at least one of the first and second transition sections. The or each flow diverting vane means may comprise an expanded metal grid means, which may be of overall planar character and have a plurality of polygonal openings therein bounded by a three-dimensional border of angularly offset strands, at least one of which is of a double width disposed in facing relation to the approaching gas stream.

A preferred embodiment of the invention takes the form of an industrial fabric filter dust collector having an operative particle separation zone of predetermined height, width and depth located within a gas impervious housing and which includes two velocity reducing transition sections one of which has an exit port of predetermined perimetric contour sized and shaped to substantially conform to the height and width and perimetric contour of said particle separation zone and disposed in spaced fluid communicating relation thereto through a complementally contoured opening in said gas impervious housing with said exit port being traversed by a selectively positioned expanded metal grid means. In association therewith, there is also provided means to equably distribute the gas stream over the upstream surface of said expanded metal grid means and to control the angle of gas stream approach thereto. The second velocity reducing transition section is disposed immediately upstream of the above-described transition section and also includes a selectively positioned expanded metal grid means traversing its exit port in association with means to equably distribute the incoming gas stream over the upstream surface of the expanded metal grid means and to control the angle of approach thereto. A turbulent flow reduction zone is disposed immediately downstream of the expanded metal grid means to permit dissipation of localized turbulence induced by passage of the gas stream through the expanded metal grid means.

Among the advantages of the preferred embodiment is the provision of substantially improved operation of gas treating apparatus, and particularly for industrial fabric filter dust collectors of both the tubular bag and panel types, characterized by improved degrees of equable distribution of the particulate laden gas stream relative to the available filter media surface, a markedly improved uniformity of dust loading of the filter elements, significantly higher separation and collection efficiencies, reduced losses, and increased service life of filter components. A further advantage is reduction of particle re-entrainment obtained in larger part by minimization, if said effective elimination, of upward movement of the dirty gas stream in the vicinity of the filter media.

In order that the invention may be well understood, the preferred embodiment discussed above, which is given by way of example only, will now be described in more detail with reference to the accompanying drawings, in which:
Figure 1 is a schematic oblique view of components of a conventional fabric filter type of dust collector employing elongate tubular filter bags in association with an exploded view of an improved gas stream inlet assembly;
Figure 2 is a second schematic oblique view of the assemblage of Figure 1 as viewed from a different direction;
Figure 3 is an expanded side elevation, partially in section, of a preferred construction for the first velocity reducing transition section incorporated in the assemblage shown in Figures 1 and 2;
Figure 4 is an enlarged scale plan view of suitable expanded metal grid material employable in the inlet assembly;
Figure 5 is a section as taken on the line 5-5 of Figure 4;
Figure 6 is a side elevation, partially in section, of a preferred construction for the second velocity reducing transition section incorporated in the assembly shown in Figures 1 and 2;
Figure 7 is a schematic representation of controlled gas stream approach to a selectively positioned expanded metal grid and effective diversion thereof;
Figure 8 is a plot of observed data illustrating drop in gas velocity and reduction in turbulence on the downstream side of an expanded metal grid;
Figures 9A and 9B are schematic representations of a dust collector having a top entry gas inlet construction; and
Figures 10A and 10B are schematic representations of a dust collector having a side entry gas inlet construction.

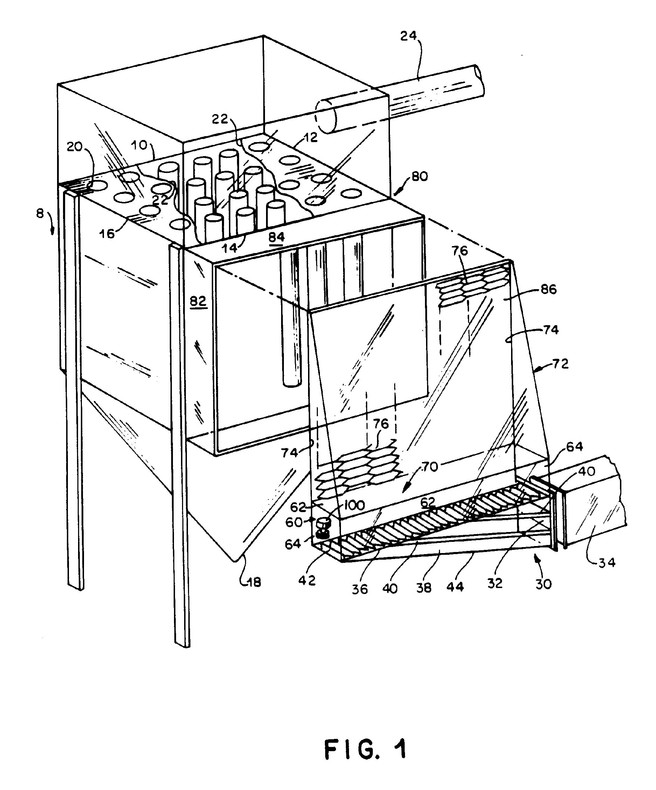

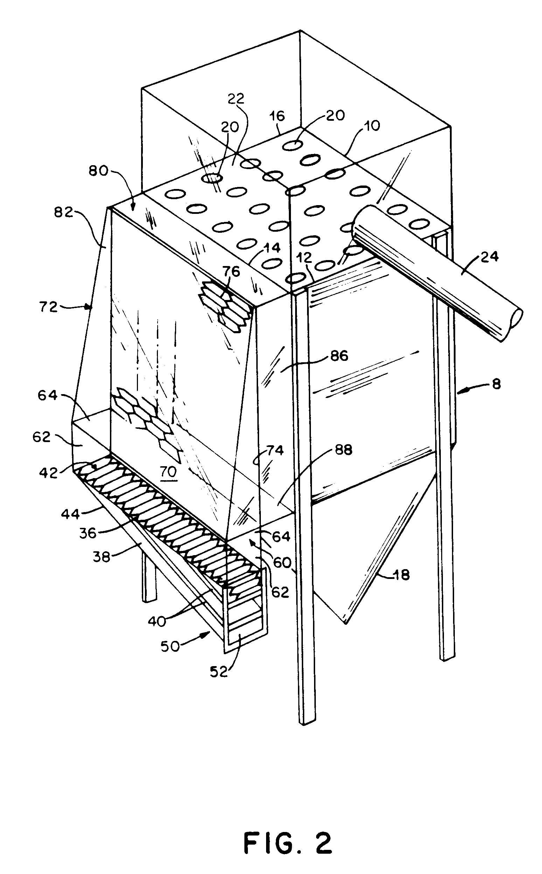

Referring to the drawings and initially to Figures 1 and 2 there is schematically depicted, by way of illustrative example, certain components of a conventional industrial fabric filter dust collector, such as a MikroPulsaire collector as manufactured by the MikroPul Corporation of Summit, New Jersey. As there depicted, such a device conventionally includes a rectangular gas impervious housing, generally designated 8, made up of side panels 10, 12, 14 and 16 and dependently terminating in a pyramidal dust collecting hopper 18. Positioned within the housing 8 are a plurality of elongate vertically disposed fabric filter bags 20 conventionally suspended from a tube sheet 22 in uniform spaced relation from each other. Conventionally, the contained volume disposed beneath the tube sheet 22 and externally of the filter tubes 20 is broadly delineated as a "dirty gas plenum". Similarly, the contained volume located above the tube sheet 22 is broadly delineated as a "filtered" or "clean gas plenum", and such is normally vented through a clean gas delivery conduit 24.

In normal filtering operations, a particulate laden gas stream is most commonly introduced into the dirty air plenum through a breach in the wall of the dust collecting hopper 18. Such gas is induced to flow upwardly toward and through the filter media 20 and into the clean gas plenum, usually by action of a fan or other prime movant located downstream of the delivery conduit 24. As previously noted and depicted in the above listed patents, turning vanes, baffle plates and other gas flow modifiers are often placed on the path of the incoming gas stream in the hopper 18 in an effort to change the direction of flow upwardly toward the filter media and to equably distribute the gas over the available fabric filter media surface. As the gas passes through the filter media 20 the particulates entrained therein are separated and accumulate on the upstream (here the external) surfaces of such media. As also previously pointed out, such accumulated particulates are removed by a cleaning operation such as pulse jet cleaning, reverse flow cleaning or by shaking. The particulates dislodged by the cleaning operation fall, under the influence of gravity and countercurrent to the direction of gas flow and normally with undesirable amounts of re-entrainment thereof, into the dust collection hopper 18.

In order to provide a markedly improved equable distribution, non-turbulent and reduced velocity gas flow to the totality of available filter media surface, there is herein provided an improved gas inlet system. Such improved gas inlet system includes a first velocity reducing transition section, generally designated 30, having an entry port 32 sized and shaped to receive a high velocity particulate laden gas stream of a first predetermined cross-sectional area as determined by the dimensions and shape of a conveying duct 34. Conventionally such incoming "dirty" gas stream is conveyed at velocities of about 3500 to 4000 feet per minute (18 to 20 m/s) to assure maintenance of particulate entrainment and to thereby effectively preclude particle separation in the conveying system. Disposed at right angles to the entry port 32 is an exit port 36 of a second and appreciably larger cross-sectional area. In the illustrated embodiment, the width of the entry port 32 and exit port 36 are the same and the increase in exit port area is obtained by markedly increasing the length thereof. Equable gas flow from the entry port 32 toward the full extent of the exit port 36 is directed by a tapering duct section 38, and, if needed for improved equable flow distribution approaching the exit port 36, by one or more flow separating and channelling partitions 40. Disposed within and traversing the full extent of the exit port 36 is a selectively positioned expanded metal grid 42 whose angled strands act as a multiple series of turning vanes to turn or divert and equably distribute the portions of the incoming gas flow upwardly through the exit port 36.

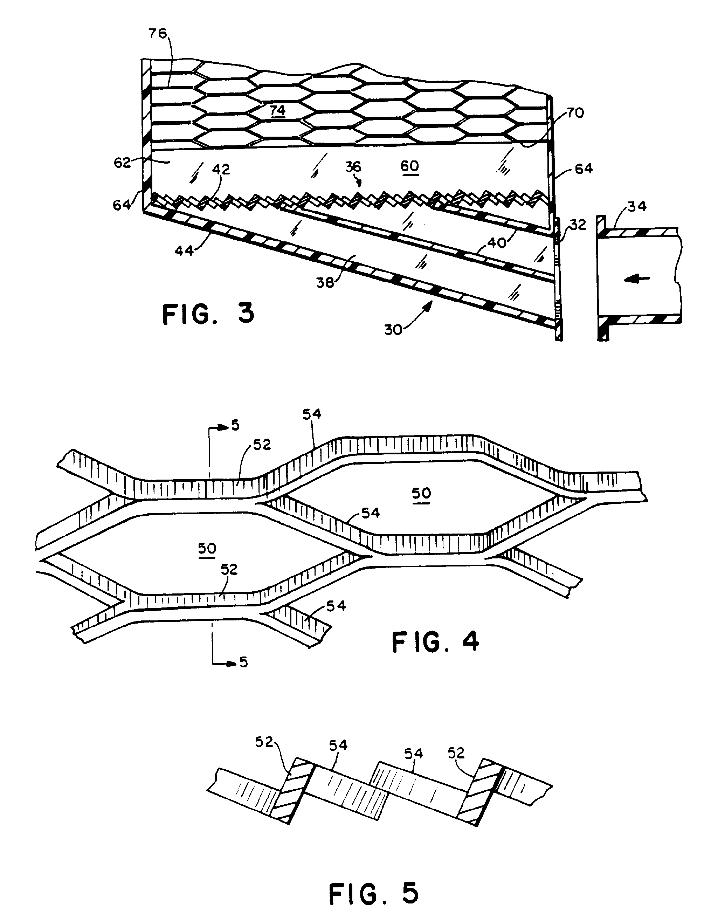

As shown in Figures 4 and 5, the expanded metal grid is a commercially available fabricated product that results from the selective deformation, as effected by either punching or by slitting and drawing, of a flat sheet of metal to form a series of elongated but regular diamond, or preferably hexagonal, shaped openings 50 therein. The metal displaced by the deformation process forms a three dimensional border surrounding each opening 50 and this bordering metal includes a portion in the form of double width angled strands 52 which are disposed at an angle to the base sheets original planar dimension and determine the effective overall thickness of the deformed product and adjacent angularly skewed single width strands 54.

As indicated above, the expanded metal grid is a commercially available fabricated product, conventionally used as flooring for runways, catwalks, platforms, stair treads and like purposes. Suitable expanded metal grid material can be obtained as RYEX Expanded Metal Grating from the Ryerson Division of Inland Steel Corporation and from McNichols Co. of Tampa, florida. As identified in the literature of the above fabricators, the type of expanded metal grid that may be used is identified as the "standard" version of expanded metal grid material wherein the strands are angularly offset. While such "standard" version of expanded metal grid material is available with either diamond shaped or hexagonal shaped openings 50, the hexagonal opening shaped material has proved more effective in the diversion of gas flow and is preferred. Available evidence to date indicates that the diamond shape is only about 70% as effective as the hexagonal shape for diverting gas flow.

Carbon steel grades of domestically available expanded metal grid material are apparently produced as 1.2, 2.5, 3.0, 3.14, 4.0, 4.25, 5, 6.25 and 7 pounds per square foot (5.8, 12.2, 14.7, 15.4, 19.6, 20.8, 24.5, 30.6 and 34.2 Kg/m²) grades. Of these, hexagonal opening material of the 3.0, 4.0, 5.0, 6.25 and 7.0 pound per square foot (14.7, 19.6, 24.5, 30.6 and 34.2 Kg/m²) grades are the most useful. As will be apparent, it is the geometrical configuration of the expanded metal grid material that is the controlling operating parameter and, as such, other material of metallic or non-metallic character and formed into a similar configuration could also be employed.

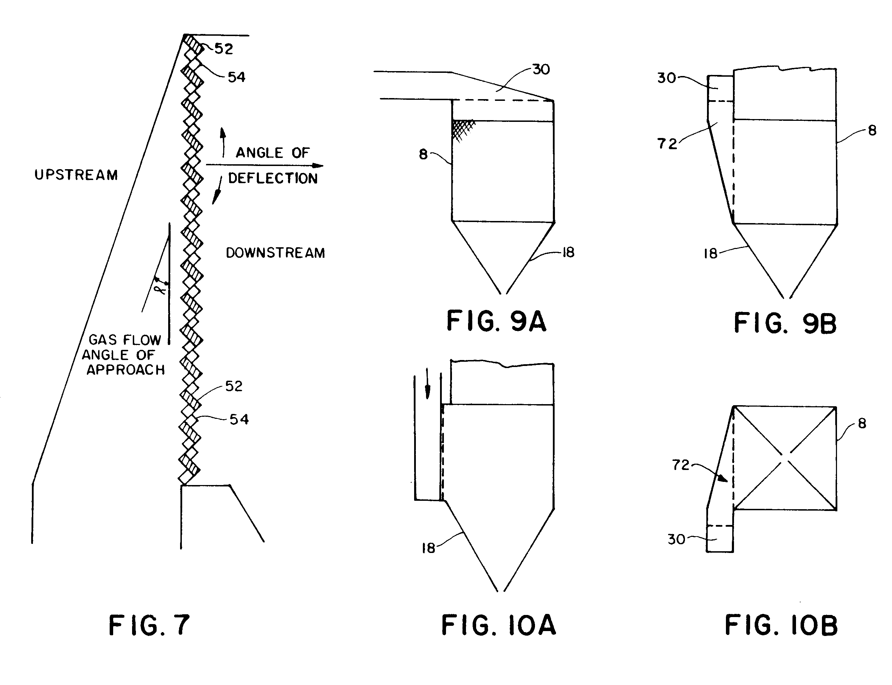

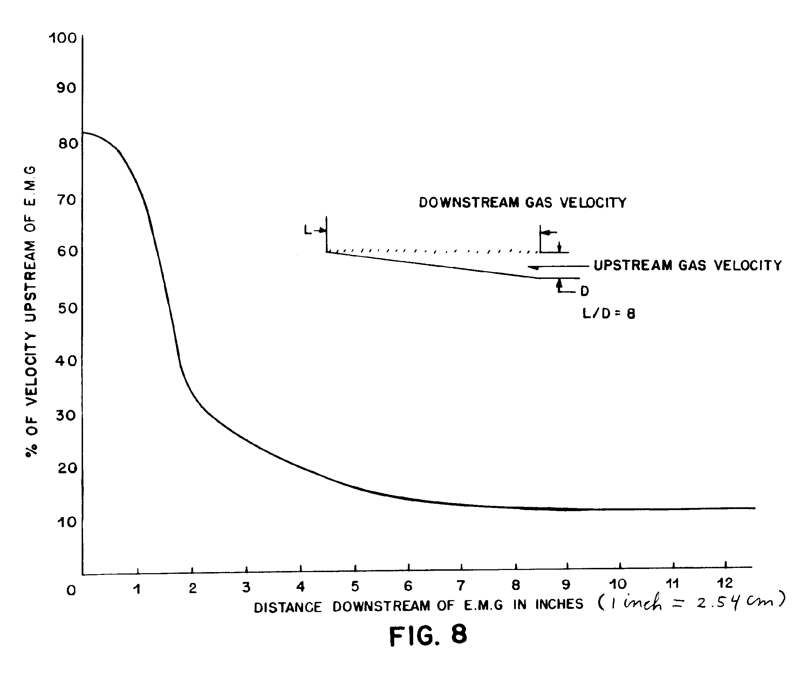

Efforts to date have indicated that the mere use of expanded metal will not, in and of itself, provide for improved filter performance. Other factors that must be observed include the selective positioning of the metal grid material, the control of the angle of approach of the gas stream to the face of the expanded metal grid, the equable distribution of the approaching gas stream over the full surface of the selectively positioned expanded metal grid and reducing the gas stream velocity to a degree desirable to decrease or minimize turbulence. Experiments have indicated that, as the bordering strands 52 and 54 defining the hexagonal openings in the expanded metal grid become wider and thicker, in accord with the weight of the product in pounds per square foot, and the openings 50 become smaller and the total free area of such openings decreases, the greater is the magnitude of the deflection of the gas stream. Thus it appears that for a given gas stream approach angle, the heavier grades of expanded metal will deflect the gas stream flow more than the lighter grades. Figure 7 depicts the desired orientation of the expanded metal grid material relative to the approaching gas stream. It has been noted that the angle of gas stream deflection not only varies for the different grades of expanded metal but also with each grade as the approach angle is changed. In general an approach angle α of from about 5 to about 30 is preferred. Stated otherwise, correct orientation of the expanded metal grid is present when the angle ß of approach of the incoming gas stream is at least normal to or forms an obtuse angle with the double width strand surface 52.

Referring back to Figures 1 and 2 it will now be apparent that the converging character of the transition section bottom wall 44 relative to the grid 42 and the resultant progressively decreasing cross-sectional area of the section in the direction of gas flow, together with the vanes 40, are directed to providing an equable distribution of gas flow as it approaches the expanded metal grid 42 disposed in the exit port 36. In association therewith, the markedly increased area of the exit port 36 as compared to the cross-sectional area of the entry port 32 functions to provide a marked reduction in gas velocity as it is diverted and passes upwardly through the exit port 36.

The passage of the gas stream through, and diversion by, the expanded metal grid 42 will inherently produce some degree of localized turbulence in the form of currents and vortices. In order to dissipate and effectively eliminate such localized turbulencs, a turbulent flow reduction zone 60, defined by the upstream surface of the grid 42 and gas impervious side walls 62 and end walls 64, is located immediately downstream of the grid 42. Such zone 60 is in the general nature of a close walled conduit of limited length and of a cross-sectional extent equal to that of the exit port 36. Such zone 60 functions to permit dissipation of localized turbulence induced by the passage of the gas stream through the first expanded metal grid 42 and further reduction in velocity thereof.

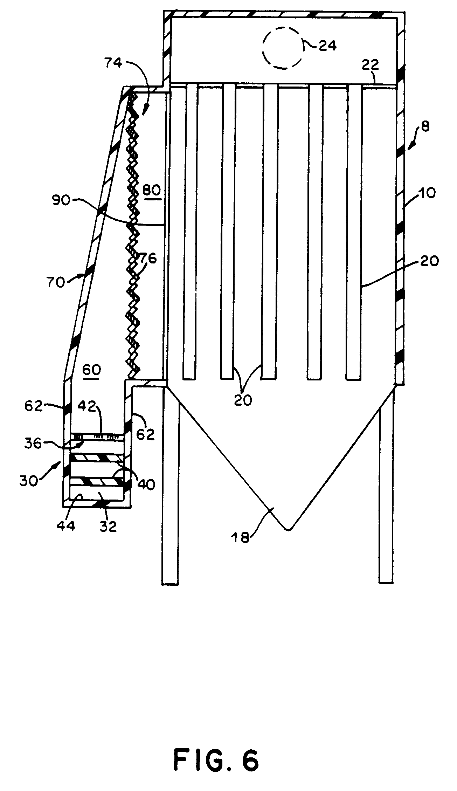

Referring now to Figures 1, 2, 3 and 6, the exit end of the turbulent flow reduction zone 60 serves as the entry port 70 of a second velocity reducing transition section, generally designated 72. The entry port 70 is suitably of a cross-sectional area generally equal to that of the exit port 36 of the first transition section 30. Disposed at right angles to such entry port 70 is an exit port 74 of markedly greater cross-sectional area. Desirably, the exit port 74 of this second transition section 72 is of a perimetric contour, here rectangular, sized to substantially conform to the height and width of the particle separation zone as the latter is defined by the overall height and width of the assemblage of filter bags 20 within the dirty gas plenum. As was the case with the first transition section 30, the exit port 74 is traversed by a second expanded metal grid 76.

In order to effect an equable distribution of the particulate gas stream over the available area of the exit port 74 and at a proper angle of approach, as above described, to the expanded metal grid 76, the second transition section 72 is also of tapering character and of progressively decreasing cross-sectional area in the direction of gas flow. If desired, flow splitting channel members or vanes of the type shown and described in conjunction with the first transition section 30, may also be included in the second transition section 72. The reduced turbulence and reduced velocity gas stream emanating from the first turbulent flow reduction zone 60 will be markedly further reduced in velocity and diverted at right angles as it passes through the expanded metal grid 76 to a direction effectively perpendicular to the surface of the filter bags 20 and equably distributed over an area substantially conforming both in shape and dimension to that of the particle separation zone. As will be apparent to those skilled in this art, local geometry conditions, and as the presence of obstructions, catwalks and the like may function to limit the area of the exit port 74. Desirably however such exit port should be as large as possible with respect to the height and width of the particle separation zone.

Since the passage of the gas stream, albeit at reduced velocity, through the second expanded metal grid 76 will be attended by localized turbulence adjacent the downstream surface thereof, a second turbulence reduction zone 80, again in the general form of a short length closed conduit of a cross section conforming generally in size and shape to the exit port and formed by walls 82, 84, 86 and 88, is disposed immediately downstream of the grid 76 and intermediate said grid and the particle separation zone within the filter housing. The downstream end of the second turbulence reduction zone 80 fluidly communicates with an opening 90 in the wall of the perimetric housing 8 again sized to substantially conform both in shape and dimension with the particle separation zone.

Figure 8 illustrates the marked drop in localized gas stream velocity within the turbulence reduction zones and immediately downstream of the expanded metal grids.

Since the passage of particulates through the expanded metal grids will, for at least some types of particulates, result in a separation and accumulation of particulate matter on the surfaces of the grids, it will be desirable in such instances to provide some means for dislodging such accumulated particulates. To the above end, a rapping device, as for example in the form of a solenoid operated hammer member 100, may be positioned on the turbulence reduction zones to impact and jar the grids.

In summary, in the depicted unit the first transition section 30 will operate to direct the incoming high velocity gas stream through a right angle turn. As the gas flow enters the initial expanded metal grid 42, the latter functions to both divert, essentially at a right angle, and, in association with the zone 60, to uniformly reduce the gas stream velocity prior to its entry into the second transition section 72. Desirably, the first expanded metal grid 42 has the same width as the inlet conduit 34 and a length that matches the width of the second expanded metal grid 76. If equably distributed, the gas flow encountering the first expanded metal grid 42 will be expanded with a consequent velocity reduction and directed to properly approach the second expanded grid 76 in equably distributed character. The reduced velocity gas stream will again be turned at right angles and further reduced in average velocity as it passes through the second expanded metal grid 76 and zone 80. The gas stream emanating from the second grid 76 and adjacent turbulence reduction zone 80 will be of a perimetric contour, both as to shape and dimension, desirably substantially matching that of the opening 90 in the housing 8 and of the particle separation zone therewithin and will be moving in a direction effectively perpendicular to the centerline of the filter media assembly. With the herein disclosed two stage transition sections and expanded metal grids disposed in the exit ports thereof, the velocity of the gas stream can readily be reduced by a factor of 10 or more and converted in form for a markedly improved equable distribution relative to the available filter media surfaces and in a path devoid of upwardly moving components with consequent reduction of particle re-entrainment. With the flexibility afforded by use of selective approach angles to the expanded metal grids of from about 5 to 30 degrees, depending upon the grade of expanded metal employed in each of the two stages, any number of specific double stage arrangements can be designed to accommodate various inlet gas velocities, various dust loadings and other characteristics of the particulate laden gas stream being conveyed to the filter.

As will now be apparent the foregoing depicted and described construction functions to effect entry of the gas stream into the housing essentially perpendicular to the longitudinal axis of the housing 8 and to the longitudinal centerline of the filter media disposed therewithin. Such direction of entry effectively eliminates the generation of any upwardly moving components of the gas stream within the housing with the heretofore described diminution of re-entrainment.

The above described nature of direction of reduced velocity gas stream entry also results in a progressive diminution of gas stream velocity as the gas stream traverses the depth of the particule separation zone.

The above described side entry of the gas stream into the housing initially brought the incoming gas stream to the filter in the vicinity of the lower portion of the housing. Depending upon the local geometry of the filter at the locus of use thereof, gas stream entry into the first transition section 30 can be effected at the top of the housing 8, as shown in Figures 9A and 9B or from the side of the housing 8, as shown in Figures 10A and 10B.

It will also be apparent to those skilled in the art that the converging character of the transition sections could be effected by having the solid base wall thereof disposed parallel to the direction of gas flow and by having the expanded metal grids disposed at an angle thereto and other than at right angles to the plane of the entry aperture.

Furthermore, although in the embodiments illustrated herein the exit port of the second transition section is arranged to deliver the gas stream into the housing through a side wall thereof, in modified arrangements such as disclosed in our copending application EP-A-0328419 the exit port may deliver the gas stream into the housing through the dependent hopper thereof when such is provided.

As a further modification the turbulent flow reduction zone immediately downstream of the exit port of the second transition section may have an inclined bottom wall to prevent accumulation of particulate matter being carried by the gas stream.

## Claims

1. Apparatus for treating gas being conveyed in a moving high velocity gas stream of first predetermined cross-sectional area, comprising
gas treating means perimetrically defining a gas treatment zone of predetermined height, width and depth,
a gas impervious housing (8) perimetrically surrounding said gas treatment zone,
gas inlet means for introducing said gas stream at reduced velocity into said gas treatment zone, said gas inlet means comprising,
a first velocity reducing transition section (30) having an entry port (32) of said first predetermined cross-sectional area for reception of said high velocity gas stream moving in a first flow direction and an exit port (36) of second and larger predetermined cross-sectional area for delivering said gas stream therefrom at a first reduced velocity and in a second, different flow direction,
a second velocity reducing transition section (72) having an entry port (70) of said second predetermined cross-sectional area to receive said reduced velocity gas stream moving in said second flow direction from said exit port (36) of said first transition section (30) and an exit port (74) of a third and larger cross-sectional area for delivering said gas stream therefrom at a second and further reduced velocity in a third flow direction different to both said first and second flow directions, wherein said first and third flow directions are substantially perpendicular to said second flow direction and characterised in that said third flow direction is substantially perpendicular to said first flow direction.

2. Apparatus as claimed in claim 1, wherein the exit port (74) of said second transition section (72) is arranged to deliver said gas stream into said housing (8) through a side wall thereof.

3. Apparatus as claimed in claim 1, wherein the exit port (74) of the second transition section (72) is arranged to deliver said gas stream into said housing through a dependent particle collecting hopper portion (18) thereof.

4. Apparatus as claimed in any one of the preceding claims, wherein the exit port (74) of the second velocity reducing transition section (72) is perimetrically contoured to conform to the shape, height and width of at least a substantial portion of said gas treatment zone and disposed in spaced fluid communicating relation thereto through a complementally contoured opening (90) in said gas impervious housing (8).

5. Apparatus as claimed in any one of the preceding claims, having means (60,64 ; 82,84,86,88) defining a turbulent flow reduction zone (60 ; 80) immediately downstream of the exit port (36 ; 74) of at least one of said velocity reducing transition sections (30 ; 72) for permitting dissipation of localised turbulence induced by the change of flow direction of the gas stream therein.

6. Apparatus as claimed in claim 5, having a said means (82,84, 86,88) defining a turbulent flow reduction zone (80) immediately downstream of the exit port (74) of the second velocity reducing transition section (72), which means is perimetrically contoured to conform to the height and width of at least a substantial portion of said gas treatment zone.

7. Apparatus as claimed in claim 5, having a said means defining a turbulent flow reduction zone (80) immediately downstream of the exit port (74) of the second velocity reducing transition section (72), which zone includes an included bottom wall to prevent accumulation of particulate matter being carried by said gas stream thereon.

8. Apparatus as claimed in any one of the preceding claims, wherein said first velocity reducing transition section (30) includes means (42) for effecting an equable distribution of the approaching gas stream on the upstream side of the exit port thereof.

9. Apparatus as claimed in any one of the preceding claims, wherein at least one of said velocity reducing transition sections (30,72) is of progressively diminishing cross-sectional area.

10. Apparatus as claimed in any one of the preceding claims, wherein flow directing vanes (40) are provided in at least one of said velocity reducing transition sections (30).

11. Apparatus as claimed in any one of the preceding claims having an array of flow diverting vane means (42,76) disposed across the exit port (36,74) of at least one of the first and second transition sections (30,72).

12. Apparatus as claimed in claim 11, wherein the or each flow diverting vane means (42,76) comprises an expanded metal grid means.

13. Apparatus as claimed in claim 12, wherein the or each expanded metal grid means is of overall planar character for equably distributing and changing the direction of flow of the gas stream thereapproaching.

14. Apparatus as claimed in claim 13, wherein the or each expanded metal grid means (42,76) has a plurality of polygonal openings (50) therein bounded by a three-dimensional border of angularly offset strands (52,54), at least one (52) of which is of a double width disposed in facing relation to the approaching gas stream.

15. Apparatus as claimed in any one of claims 11 to 14, wherein the or each flow diverting vane means (42,76) is disposed such that the gas stream approaches same at an angle of about 5 to 30° from the longitudinal axis thereof.

16. Apparatus as claimed in any one of the preceding claims, wherein said gas treating means comprises particle separation means (20).

17. Apparatus as claimed in claim 16 when appended to any one of claims 11 to 15, further including means for dislodging particulate matter that accumulates on said vane means.

18. Apparatus as claimed in claim 16 or 17, wherein said particle separation means comprises a multiplicity of fabric filter particle separating means (20) arranged in spaced parallel relation to each other and perimetrically defining said gas treatment zone, and said gas impervious housing (8) dependently terminates in a particle collection hopper (18) disposed beneath said fabric filter particle separating means.

19. Apparatus as claimed in claim 18, wherein said fabric filter particle separating means comprises elongate tubular filter bags (20).

20. Apparatus as claimed in claim 18, wherein said fabric filter particle separating means comprise elongate filter panels.

21. Apparatus as claimed in any one of claims 16 to 20, wherein said gas inlet means is arranged to introduce gas into said housing in a direction substantially perpendicular to the center line of said particle separation means.

## Patentansprüche

1. Einrichtung zur Behandlung von in einem sich bewegenden Hochgeschwindigkeitsgasstrom von erster vorbestimmter Querschnittsfläche befördertem Gas mit
einer, eine Gasbehandlungszone von vorbestimmter Höhe, Breite und Tiefe umfangsseitig begrenzenden Gasbehandlungseinrichtung,
einem gasundurchlässigen Gehäuse (8), das die Gasbehandlungszone außen begrenzend umgibt,
einer Gaseinlaßeinrichtung zum Einführen des Gasstromes in die Gasbehandlungszone mit verringerter Geschwindigkeit, wobei die Gaseinlaßeinrichtung aufweist:
einen ersten geschwindigkeitsverringernden Ubergangsabschnitt (30) mit einer Eintrittsöffnung (32) der ersten vorbestimmten Querschnittfläche zur Aufnahme des sich in eine erste Strömungsrichtung bewegenden Hochgeschwindigkeitsgasstromes und einer Austrittsöffnung (36) von zweiter und größerer vorbestimmter Querschnittsfläche, um den Gasstrom daraus mit einer ersten verringerten Geschwindigkeit und in einer zweiten verschiedenen Strömungsrichtung abzugeben,
einen zweiten geschwindigkeitsverringernden Ubergangsabschnitt (72) mit einer Eintrittsöffnung (70) der zweiten vorbestimmten Querschnittsfläche, um den sich von der Austrittsöffnung (36) des ersten Übergangsabschnitts (30) in die zweite Strömungsrichtung bewegenden geschwindigkeitsverringerten Gasstrom aufzunehmen und einer Austrittsöffnung (74) von dritter und größerer Querschnittsfläche, um den Gasstrom daraus mit einer zweiten und weiter verringerten Geschwindigkeit in eine von den ersten und zweiten Strömungsrichtungen verschiedenen dritten Strömungsrichtung abzugeben, wobei die ersten und dritten Strömungsrichtungen weitgehend rechtwinklig zur zweiten Strömungsrichtung sind, dadurch gekennzeichnet, daß die dritte Strömungsrichtung weitgehend rechtwinklig zur ersten Strömungsrichtung ist.

2. Einrichtung nach Anspruch 1, dadurch gekennzeichnet, daß die Austrittsöffnung (74) des zweiten Übergangsabschnitts (72) zur Abgabe des Gasstroms in das Gehäuse (8) durch eine Seitenwand davon angeordnet ist.

3. Einrichtung nach Anspruch 1, dadurch gekennzeichnet, daß die Austrittsöffnung (74) des zweiten Übergangsabschnitts (72) zur Abgabe des Gasstroms in das Gehäuse durch einen davon abhängenden Partikelsammeltrichterabschnitt (18) angeordnet ist.

4. Einrichtung nach einem der vorstehenden Ansprüche, dadurch gekennzeichnet, daß die Austrittsöffnung (74) des zweiten geschwindigkeitsverringernden Übergangsabschnitts (72) an der Außenbegrenzung profiliert ist, um der Form, Höhe und Breite wenigstens eines Hauptabschnitts der Gasbehandlungszone zu entsprechen und getrennt davon durch eine im gasundurchlässigen Gehäuse (8) angeordnete komplementär profilierte Öffnung (90) damit in Fluidverbindung steht.

5. Einrichtung nach einem der vorstehenden Ansprüche, gekennzeichnet durch eine Einrichtung (60,64; 82,84,86,88), die eine unmittelbar stromabwärts der Austrittsöffnung (36;74) wenigstens einer der geschwindigkeitsverringernden Übergangsabschnitte (30;72) angeordnete Turbulenz-Strömungs-Verringerungszone begrenzt zur Dissipation darin befindlicher vom Wechsel der Strömungsrichtung des Gasstroms hervorgerufener Turbulenz.

6. Einrichtung nach Anspruch 5, gekennzeichnet durch eine Einrichtung (82,84,86,88), die eine unmittelbar stromabwärts der Austrittsöffnung (74) des zweiten geschwindigkeitsverringernden Übergangsabschnitts (72) angeordnete Turbulenz-Strömungs-Verringerungszone (80) begrenzt, wobei die Einrichtung an der äußeren Begrenzung profiliert ist, um der Höhe und Breite wenigstens eines Hauptabschnitts der Gasbehandlungszone zu entsprechen.

7. Einrichtung nach Anspruch 5, gekennzeichnet durch eine Einrichtung, die eine unmittelbar stromabwärts der Austrittsöffnung (74) des zweiten geschwindigkeitsverringernden Übergangsabschnitts (72) angeordnete Turbulenz-Strömungs-Verringerungszone (80) begrenzt, wobei die Zone eine geneigte Bodenwand besitzt, um die Anhäufung von mit dem Gasstrom getragenen Partikelmaterials darauf zu verhindern.

8. Einrichtung nach einem der vorstehenden Ansprüche, dadurch gekennzeichnet, daß der erste geschwindigkeitsverringernde Übergangsabschnitt (30) eine Einrichtung (42) zur Bewirkung einer gleichmäßigen Verteilung des an der stromaufwärts gerichteten Seite ihrer Austrittsöffnung ankommenden Gasstroms aufweist.

9. Einrichtung nach einem der vorstehenden Ansprüche, dadurch gekennzeichnet, daß wenigstens einer der geschwindigkeitsverringernden Übergangsabschnitte (30,72) eine sich progressiv verringernde Querschnittsfläche aufweist.

10. Einrichtung nach einem der vorstehenden Ansprüche, dadurch gekennzeichnet, daß in wenigstens einem der geschwindigkeitsverringernden Übergangsabschnitte (30) Strömungsleitblätter (40) vorgesehen sind.

11. Einrichtung nach einem der vorstehenden Ansprüche, gekennzeichnet durch ein Feld von Strömungsablerikblatteinrichtungen (42,76) die quer zur Austrittsöffnung (36,74) wenigstens einer der ersten und zweiten Übergangsabschnitte (30,72) angeordnet sind.

12. Einrichtung nach Anspruch 11, dadurch gekennzeichnet, daß die oder jede Strömungsablenkblatteinrichtung (42,76) eine gestreckte Metallgittereinrichtung aufweist.

13. Einrichtung nach Anspruch 12, dadurch gekennzeichnet, daß die oder jede gestreckte Metallgittereinrichtung zur gleichmäßigen Verteilung und zum Wechseln der Strömungsrichtung des sich dort nähernden Gasstroms überall planar ausgebildet ist.

14. Einrichtung nach Anspruch 13, dadurch gekennzeichnet, daß die oder jede gestreckte Metallgittereinrichtung (42,76) eine Vielzahl darin angeordneter polygonaler Öffnungen (50) aufweist, die von einer dreidimensionalen Grenze aus winkelig gegeneinander versetzter Stränge (52,54) begrenzt sind, wobei wenigstens einer (52) davon von doppelter Breite dem sich nähernden Gasstrom zugerichtet angeordnet ist.

15. Einrichtung nach einem der Ansprüche 11 - 14, dadurch gekennzeichnet, daß die oder jede Strömungsablenkblatteinrichtung (42, 76) derart angeordnet ist, daß sich der Gasstrom in einem Winkel von etwa 5 bis 30 Grad von deren Längsachse nähert.

16. Einrichtung nach einem der vorstehenden Ansprüche, dadurch gekennzeichnet, daß die Gasbehandlungseinrichtung eine Partikeltrenneinrichtung (20) aufweist.

17. Einrichtung nach Anspruch 16 in Abhängigkeit von einem der Ansprüche 11 - 15, gekennzeichnet durch eine Einrichtung zum Entfernen von sich an der Blatteinrichtung anhäufenden Partikelmaterials.

18. Einrichtung nach Anspruch 16 oder 17, dadurch gekennzeichnet, daß die Partikeltrenneinrichtung eine Vielzahl von Faserfilter-Partikeltrenneinrichtungen (20) aufweist, die getrennt parallel zueinander angeordnet sind und die Gasbehandlungszone außen begrenzend bilden und wobei das gasundurchlässige Gehäuse (8) abhängend in einem unterhalb der Faserfilter-Partikeltrenneinrichtung angeordneten Partikelsammeltrichter (18) endet.

19. Einrichtung nach Anspruch 18, dadurch gekennzeichnet, daß die Faserfilter-Partikeltrenneinrichtung langgestreckte rohrförmige Filterbeutel (20) aufweist.

20. Einrichtung nach Anspruch 18, dadurch gekennzeichnet, daß die Faserfilter-Partikeltrenneinrichtung langgestreckte Filterplatten aufweist.

21. Einrichtung nach einem der Ansprüche 16 - 20, dadurch gekennzeichnet , daß die Gaseinlaßeinrichtung zum Einführen von Gas in das Gehäuse in einer Richtung weitgehend rechtwinklig zur Mittellinie der Partikeltrenneinrichtung angeordnet ist.

## Revendications

1. Dispositif pour traitement de gaz acheminé dans un flux gazeux se déplaçant à grande vitesse ayant une première superficie de section transversale prédéterminée, comprenant
un moyen de traitement de gaz définissant de manière périmétrique une zone de traitement de gaz de hauteur, largeur et profondeur prédéterminées,
un carter (8) imperméable au gaz, entourant de manière périmétrique ladite zone de traitement de gaz,
un moyen d'admission de gaz pour introduire ledit flux gazeux à une vitesse réduite dans ladite zone de traitement de gaz, ledit moyen d'admission de gaz comprenant,
une première section de passage à réduction de vitesse (30) avec un orifice d'entrée (32), ayant ladite première superficie de la section transversale prédéterminée, pour la réception dudit flux gazeux à grande vitesse qui se déplace dans une première direction d'écoulement, et un orifice de sortie (36), d'une deuxième, et plus grande, superficie de section transversale prédéterminée pour délivrer ledit flux gazeux, à partir de là, à une première vitesse réduite et dans une deuxième direction d'écoulement, différente,
une seconde section de passage à réduction de vitesse (72) avec un orifice d'entrée (70) ayant ladite deuxième superficie de section transversale prédéterminée, pour recevoir ledit flux gazeux à vitesse réduite, qui se déplace dans ladite deuxième direction d'écoulement à partir dudit orifice de sortie (36) de ladite première section de passage(30), et un orifice de sortie (74) d'une troisième, et plus grande, superficie de section transversale prédéterminée, pour délivrer ledit flux gazeux, à partir de là, à une deuxième vitesse encore davantage réduite dans une troisième direction d'écoulement, différente desdites première et deuxième directions d'écoulement, lesdites première et troisième directions d'écoulement étant sensiblement perpendiculaires à ladite deuxième direction d'écoulement, et caractérisé en ce que ladite troisième direction d'écoulement est sensiblement perpendiculaire à ladite première direction d'écoulement.

2. Dispositif selon la revendication 1, dans lequel l'orifice de sortie (74) de ladite seconde section de passage (72) est propre à délivrer ledit flux gazeux dans ledit carter (8) par l'intermédiaire d'une paroi latérale de celui-ci.

3. Dispositif selon la revendication 1, dans lequel l'orifice de sortie (74) de la seconde section de passage(72) est propre à délivrer ledit flux gazeux dans ledit carter par l'intermédiaire d'une partie trémie collectrice de particules (18) dépendant de celui-ci.

4. Dispositif selon l'une quelconque des revendications précédentes, dans lequel l'orifice de sortie (74) de la seconde section de passage à réduction de vitesse (72) a un contour périmétrique qui concorde avec la forme, la hauteur et la largeur d'au moins une grande partie de ladite zone de traitement de gaz et est disposé, dans ledit carter (8) imperméable au gaz, de façon espacée, en communication de fluide avec celle-ci par l'intermédiaire d'une ouverture (90) de forme complémentaire.

5. Dispositif selon l'une quelconque des revendications précédentes, comportant des moyens (60, 64 ; 82, 84, 86, 88) définissant une zone de réduction d'écoulement turbulent (60; 80) immédiatement en aval de l'orifice de sortie (36 ; 74) d'au moins l'une desdites sections de passage à réduction de vitesse (30 ; 72) pour permettre la dissipation de la turbulence localisée induite par le changement de direction d'écoulement du flux gazeux à l'intérieur de celle-ci.

6. Dispositif selon la revendication 5, ayant l'un desdits moyens (82, 84, 86, 88), définissant une zone de réduction d'écoulement turbulent (80), situé immédiatement en aval de l'orifice de sortie (74) de la seconde section de passage à réduction de vitesse (72), ledit moyen ayant un contour périmétrique qui concorde avec la hauteur et la largeur d'au moins une grande partie de ladite zone de traitement de gaz.

7. Dispositif selon la revendication 5, ayant l'un desdits moyens, définissant une zone de réduction d'écoulement turbulent (80), situé immédiatement en aval de l'orifice de sortie (74) de la seconde section de passage à réduction de vitesse (72), ladite zone comprenant une paroi inférieure inclinée pour empêcher que des matières particulaires acheminées par ledit flux gazeux s'y accumulent.

8. Dispositif selon l'une quelconque des revendications précédentes, dans lequel ladite première section de passage à réduction de vitesse (30) comprend un moyen (42) pour effectuer une répartition régulière du flux gazeux arrivant du côté amont de l'orifice de sortie de celle-ci.

9. Dispositif selon l'une quelconque des revendications précédentes, dans lequel au moins l'une desdites sections de passage à réduction de vitesse (30, 72) a une superficie de section transversale qui diminue progressivement.

10. Dispositif selon l'une quelconque des revendications précédentes, dans lequel des ailettes d'orientation d'écoulement (40) sont prévues dans au moins l'une desdites sections de passage à réduction de vitesse (30).

11. Dispositif selon l'une quelconque des revendications précédentes, ayant un agencement de moyens d'ailettes de déviation d'écoulement (42, 76), disposées en travers de l'orifice de sortie (36, 74) d'au moins l'une des première et seconde sections de passage (30, 72).

12. Dispositif selon la revendication 11, dans lequel le, ou chaque, moyen d'ailette de déviation d'écoulement (42, 76) comprend un moyen de grille en métal déployé.

13. Dispositif selon la revendication 12, dans lequel le, ou chaque, moyen de grille en métal déployé a une nature globalement plane pour répartir de manière régulière et pour modifier la direction d'écoulement du flux gazeux qui y arrive.

14. Dispositif selon la revendication 13, dans lequel le, ou chaque, moyen de grille en métal déployé (42, 76) a une pluralité d'ouvertures polygonales (50) qui y sont délimitées par une bordure tridimensionnelle de barrettes (52, 54) angulairement décalées, dont au moins l'une (52) a une double largeur faisant face au flux gazeux arrivant.

15. Dispositif selon l'une quelconque des revendications 11 à 14, dans lequel le, ou chaque, moyen d'ailette de déviation d'écoulement (42, 76) est disposé de telle manière que le flux gazeux y arrive en formant un angle d'environ 5 à 30° par rapport à l'axe longitudinal de celle-ci.

16. Dispositif selon l'une quelconque des revendications précédentes, dans lequel ledit moyen de traitement de gaz comprend un moyen de séparation des particules (20).

17. Dispositif selon la revendication 16 lorsqu'elle est dépendante de l'une quelconque des revendications 11 à 15, comprenant en outre un moyen pour retirer les matières particulaires qui s'accumulent sur ledit moyen d'ailette.

18. Dispositif selon la revendication 16 ou 17, dans lequel ledit moyen de séparation des particules comprend une multiplicité de moyens de séparation de particules à base de filtres en tissu (20) disposés en parallèle avec un écartement entre eux et définissant de manière périmétrique ladite zone de traitement de gaz, et ledit carter (8) imperméable au gaz se terminant par une trémie collectrice de particules (18) disposée sous ledit moyen de séparation de particules à base de filtres en tissu.

19. Dispositif selon la revendication 18, dans lequel ledit moyen de séparation de particules à base de filtres en tissu comprend des sacs filtrant tubulaires oblongs (20).

20. Dispositif selon la revendication 18, dans lequel ledit moyen de séparation des particules à base de filtres en tissu comprend des panneaux filtrants oblongs.

21. Dispositif selon l'une quelconque des revendications 16 à 20, dans lequel ledit moyen d'admission de gaz est propre à introduire le gaz dans ledit carter dans une direction sensiblement perpendiculaire à l'axe dudit moyen de séparation de particules.
